Europäisches Patentamt

(19) European Patent Office

Office européen des brevets

(11) Publication number: **0 035 777**
**B1**

(12) **EUROPEAN PATENT SPECIFICATION**

(45) Date of publication of patent specification: **05.11.86**

(51) Int. Cl.⁴: **C 04 B 35/58**

(21) Application number: **81101656.7**

(22) Date of filing: **06.03.81**

(54) Abrasion resistant silicon nitride based articles.

(30) Priority: **07.03.80 US 128070**

(43) Date of publication of application:
**16.09.81 Bulletin 81/37**

(45) Publication of the grant of the patent:
**05.11.86 Bulletin 86/45**

(84) Designated Contracting States:
**AT BE CH DE FR GB IT LI NL SE**

(56) References cited:
**WO-A-80/00080**
**GB-A-1 500 108**
**SU-A-537 986**
**US-A-4 073 845**
**US-A-4 184 882**

(73) Proprietor: **GTE Laboratories Incorporated**
**100 W. 10th Street**
**Wilmington Delaware (US)**

(72) Inventor: **Sarin, Vinod K.**
**7 Diamond Road**
**Lexington, Mass 02173 (US)**
Inventor: **Penty, Robert A.**
**21 Island View Road**
**Cape Elizabeth Maine 04107 (US)**
Inventor: **Buljan, Sergey-Tomislav**
**22 Washington Drive**
**Acton, Mass. 01720 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

# Description

The invention relates to abrasion resistant silicon nitride based articles and, in particular, to a densified composite cutting tool as indicated in the precharacterizing portion of claim 1. Furthermore, the invention relates to a powder composition for the production of an abrasion resistant material as indicated in the precharacterizing portion of claim 15. Furthermore, the invention relates to a process for preparing a composite article as indicated in the precharacterizing portion of claim 16.

SU—A—537 986 discloses a ceramic material for the manufacture of cutting tools which consists of 55—90% silicon nitride 5—30% titanium carbide and 5—15% magnesium oxide or aluminum oxide.

In order to obtain said ceramic material, suitable amounts of silicon nitride, titanium carbide and magnesium oxide or aluminum oxide are simultaneously milled and mixed in an acetone medium. After drying the powder mixture is then hot-pressed at a temperature of 1700°C.

An article, Soviet Powder Metallurgy and Metal Ceramics, pages 124—7, which is a translation from Poroshkovaya Metallurgiya, No. 2 (182), pp. 48—52, February, 1978, describes the preparation of dense nonporous silicon nitride blanks used for cutting tools from alumina, silicon nitride and titanium carbide.

U.S. Patent 4,184,882 to Lange relates to a composite material formed from sintering and densification of a mixture of silicon nitride, silicon carbide and a densification aid.

The object of the present invention is to provide a densified composite cutting tool of the type as indicated in the precharacterizing portion of claim 1 which, however, shows improved properties, in particular, in terms of hardness, oxidation resistance and wear resistance at high temperatures.

A densified composite cutting tool according to the invention is characterized in that the second face of said matrix comprises silicon nitride and a densification aid selected from yttrium oxide, zirconium oxide, hafnium oxide and the lanthanide rare earth oxides and/or mixtures thereof.

Furthermore, the invention provides a powder composition for the production of an abrasion resistant material as defined in claim 15 as well as a process for preparing a composite article according to claim 16.

Brief description of the drawing

In the drawing:

Figure 1 is a graph illustrating the variation of hardness with variation of refractory material content of articles in accordance with this invention.

Figure 2 is a graph comparing oxidation resistance of a prior art material to that of articles of the present invention.

Figure 3 is a graph illustrating wear resistance of cutting tools in accordance with this invention.

For a better understanding of the present invention, together with other and further objects, advantages and capabilities thereof, reference is made to the following disclosure and appended claims in connection with the above-described drawing.

Detailed description

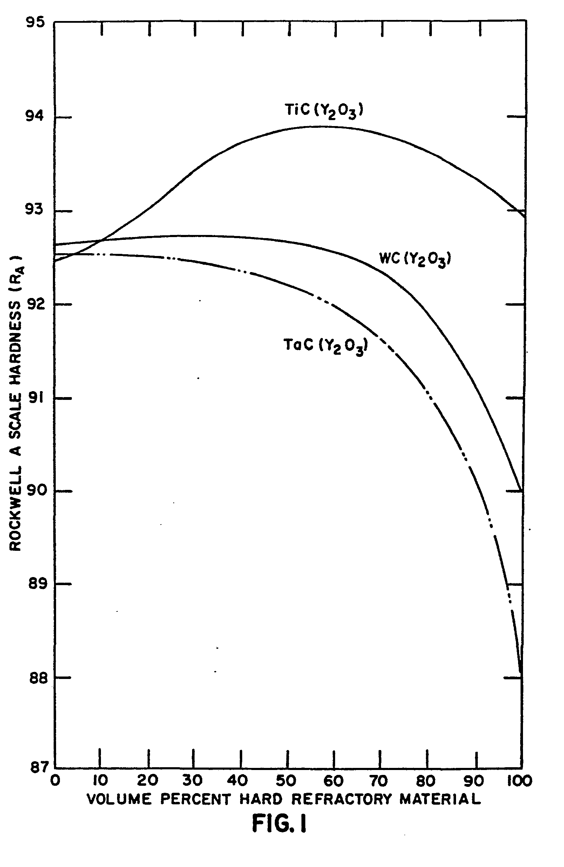

Abrasion resistant articles according to the present invention comprise finely divided particles of a hard refractory material dispersed in a matrix. By the term hard refractory material, as used throughout this specification and appended claims, is meant any carbide or nitride of a refractory metal. The refractory material has a microhardness greater than 1000 kg/mm² and a fusion or decomposition temperature greater than 1500°C. Typical hard refractory materials include the carbides and nitrides, or combinations including solid solutions thereof of titanium, vanadium, chromium, zirconium, niobium, molybdenum, hafnium, tantalum, tungsten and mixtures thereof. Figure 1 is illustrative of hardness for articles of the present invention prepared with titanium carbide, tungsten carbide and tantalum carbide based on volume percent of hard refractory material; titanium carbide and hafnium carbide are the most preferred hard refractory materials.

The average particle size of the hard refractory material incorporated into articles in accordance with this invention is chosen dependent upon the use to which the article is put, but ranges below about 20 µm. For example, for cutting tool applications, the average particle size is chosen near the lower end of the range, preferably below about 5 µm. On the other hand, for mining tools and wear parts, average particle sizes above 5 µm may be used.

The useful life and performance of articles in accordance with this invention depend, in large part, on the volume taken up by the particles of hard refractory material in the article. The hard refractory material should comprise from about 1% to about 60% by volume of the densified article. As discussed further below, the hardness of the articles decreases at concentrations of refractory material in excess of 60% by volume. The preferred range of refractory material content is from about 15% to about 50% by volume. A more preferred range is from about 20 to about 40 volume percent.

In accordance with the principles of the present invention, the hard refractory materials are uniformly distributed in a matrix consisting essentially of a first phase and second phase. The first phase consists essentially of silicon nitride. The second intergranular phase or secondary phase comprises silicon nitride and an effective amount of a densification aid.

For optimizing the desirable properties, particularly high temperature strength of the composite of the present invention, it is preferable to maximize the high temperature stability of the secondary intergranular phase and maximize the density of the final densified composites. While the densification aid is essential to achieve highest densities, that is, densities approaching theoretical, improper composition of the second phase can deleteriously affect maximum attainable high temperature strength and creep resistance. The densification aids of the present invention stabilize the secondary phase to such an extent that the secondary phase is a refractory phase having desirable high temperature properties. Typical densification aids are yttrium oxide, zirconium oxide, hafnium oxide and the lanthanide rare earth oxides and mixtures thereof. Yttrium oxide and hafnium oxide are preferred densification aids. The densification aid is employed from a lower effective amount which permits high theoretical densities to an upper amount which does not unduly affect the high temperature properties. Preferably the densification aid comprises from about 1 to about 25 weight percent of the matrix, more preferably, from about 1 to about 5 weight percent of the matrix.

For optimizing the desirable high temperature properties of the composite of the present invention, it is desirable to minimize the presence of any additive such as aluminum oxide, at least to the extent that the favorable desirable high temperature properties of the final article are unfavorably affected by alteration of the secondary phase. Preferably aluminum oxide is present in the matrix material in an amount less than about 5 percent by weight based on the total weight of the matrix material, more preferably less than about 3 percent.

The secondary intergranular phase may contain further additional materials in the form of additives and impurities in addition to the hereinbefore mentioned densification aids and additives such as aluminum oxide. Such further additional materials may contribute to the desirable final properties. Such further additional materials are preferably present in an amount less than about 5 percent by weight based on the weight of the secondary phase. It is contemplated that silicon dioxide may be a desirable additive. In case of silicon nitride bodies having a crystalline silicon nitride phase and a secondary phase, it has been found that silicon dioxide present in an effective amount enables optimization of oxidation resistance in such bodies.

Impurities may be present in the starting powder used for the manufacture of the composite of the present invention. These impurities tend to become concentrated in the intergranular phase during preparation of the composite. Preferably the purity of the starting powder is high, having less than about 0.1 weight percent cation impurities. A typical undesirable impurity is calcium which tends to deleteriously affect the secondary phase and high temperature properties.

The materials described herein have a composite microstructure of a refractory material, $Si_3N_4$ grains, and a secondary intergranular phase comprising silicon nitride and the densifying additive. As hereinbefore mentioned, impurities and additives present in the body tend to concentrate in the secondary intergranular phase. Because the secondary intergranular phase is continuous, its characteristics profoundly affect the high temperature properties of the composite material. The composite of the present invention possess high strength at temperatures in excess of 1200°C, preferably in excess of 1500°C.

In accordance with the invention, a method is provided for facilitating sintering composite to densities approaching theoretical density while maintaining optimum levels of mechanical strength at both room temperature and elevated temperatures, making them particularly useful in applications such as cutting tools.

In accordance with the principles of the present invention, the starting powder composition consists essentially of from about 25% to about 95% by weight of a silicon nitride powder, from about 1% to about 10% by weight of a powdered densification aid, and from about 5 to about 40 percent by weight refractory material powder. Additional ingredients are preferably present in the starting powder in amounts less than 5 percent by weight based on total weight of the starting powder.

The hard refractory particulate is dispersed in a matrix which is compacted to a high density by sintering or hot pressing techniques. A composition for the production of abrasion resistant materials according to the present invention may be made by employing $Si_3N_4$ powder, generally of particle size below about 3 μm, which is preferably either partly crystallized amorphous material or a mixture of substantially completely amorphous and substantially completely crystalline material. The crystalline $Si_3N_4$ which may be either the alpha or the beta polymorph or a mixture of these is preferably present in the amount of from 5% to 60% by weight of the total amount of $Si_3N_4$ powder, the remainder being substantially amorphous. Silicon nitride ceramics produced from such starting materials exhibit good to excellent densities and modulus of rupture values, as well as acceptable shrinkage values of the powder compacts during sintering.

The present crystallinity of the starting material, if unknown, may be determined either by x-ray diffraction techniques, in which the intensity of the diffraction peaks of crystalline material is compared to a standard, or by infrared spectroscopy in which the relative intensities of the broad absorption peak of the amorphous material and the narrow peaks of the crystalline material are compared.

Densification of the silicon nitride and refractory material is aided by the incorporation of the densification aid into the initial composition. In the initial powder compositions employed in the fabrication, the densification aid comprises initially from about 1% to about 10% by weight of the powder composition. Following densification of this powder composition to a highly densified product, the refractory metal carbide comprises from about 1% to about 60% of the total volume of the densified article as set out above. In the densified article, the balance of the article comprises the matrix of polycrystalline silicon nitride and the densification aid. In this densified article, the densification aid makes up from about 1% to about 25% by weight of the host matrix. The starting materials may be processed to a powder compact of adequate green strength by thoroughly mixing the starting materials by processes such as ball milling in a nonreactive liquid medium, such as toluene or methanol, and consolidating the mixture by pressing, extruding, or slip casting. Processing may also optionally include a presintering or prereacting step in which either the uncompacted powder or the powder compact is heated at moderate temperatures. Details of the fabrication of articles in accordance with this invention are given in Methods I and II.

The host matrix comprises a two phase system made up of a first phase of silicon nitride grains and a secondary phase including the densification aid. The particles of hard refractory material are uniformly dispersed throughout this matrix. Since the strength of articles in accordanace with this invention decreases with increasing porosity in the total compact, it is important that the compact be sintered or pressed to a density as nearly approaching 100% theoretical density as possible. By theoretical is meant the value obtained by a weighted average of the densities of the components of the compact. As can be seen from the data in the Table below, densities approaching 100% of theoretical have been achieved for compacts containing yttrium oxide. Particular resistance to oxidation is conferred upon abrasion resistant articles of this invention by preferred densification aids. Yttrium oxide and hafnium oxide are preferred densification aids.

The porosity of articles of this invention is extremely low as indicated by the high theoretical density values given in the Table. The resulting strength of such articles is greater than that of silicon nitride based articles obtained by nitriding techniques or reaction bonding methods. The density of such articles is generally of the order of about 80% of theoretical.

Densified ceramic articles made in accordance with this invention are hard, nonporous, abrasion resistant, and resistant to oxidation. Applications of these articles include, but are not limited to cutting tools, mining tools, stamping and deep-drawing tools extrusion dies, wire and tube drawing dies, nozzles, guides, bearings, and wear-resistant, and structural parts.

As demonstrated by the Examples given below, hard abrasion resistant cutting tools having improved resistance to oxidation can be fabricated in accordance with this invention by distributing particles of a hard refractory material in a matrix comprising polycrystalline silicon nitride and a densification aid.

To enable one skilled in the art to practice this invention, the following Examples are provided. These Examples are, however, not to be viewed as limiting the scope of the invention as claimed, but are intended only to be illustrative thereof. The materials of Examples I—VI below have been prepared by hot pressing or sintering techniques detailed in Methods I and II below.

Methods I and II illustrate methods of preparing abrasion resistant silicon nitride based materials in accordance with this invention. In one method, pressed green compacts containing silicon nitride, a particulate hard refractory material and a sintering or densification aid are sintered to a dense, polycrystalline product. In a second method, dry powdered mixtures of silicon nitride, a particulate hard refractory material, and a densification aid are hot pressed to produce a shaped article comprising a polycrystalline highly densified product.

Method I

To one part of a mixture of silicon nitride, hard refractory material, and densification aid are added about 2.5 parts by weight toluene, about 0.1 parts methanol, and about 0.05 parts stearic acid. The resulting slurry is thoroughly mixed by ball milling and then dried at 105°C. The resulting dry mixture is ball milled for about 24 hours and then mixed with about 0.05 parts by weight of polyethylene glycol-methoxypolyethylene glycol copolymer, 1 part toluene and about 0.05 parts methanol. This mixture is ball milled for about 15 minutes, dried at 105°C and then screened to obtain a powder having a particle size less than 250 μm (60 mesh). The −60 mesh fraction is pressed at about 1,700 bar to obtain a green compact. The residual solvents and binders in the green compact are removed by heating at 600°C in an inert atmosphere. The green compact is then sintered to a hard, highly densified product by heating to temperatures of 1700°—1850°C.

Method II

To one part of a mixture of silicon nitride, hard refractory material, and densification aid are added about 2.5 parts by weight toluene and about 0.1 parts methanol. The resulting slurry is thoroughly mixed by ball milling and then dried at 105°C. The dry mixture is ball milled for about 24 hours and then screened through a 60 mesh screen. The fraction having a particle size less than 250 μm is pressed at about 200 bar and about 1700°C to produce a hard, highly densified product.

Examples I—VI illustrate the incorporation in the host matrix of silicon nitride and densification aid of a hard particulate refractory metal carbide at a variety of concentrations.

The hardness of the materials prepared in Examples I—VI was determined on a metallographically polished surface of each sample by the indentation hardness test using the Rockwell A-scale ($R_A$). The hardness data for Examples I—VI given in Table 1 and for the carbides of titanium, tungsten and tantalum are plotted in Figure 1 versus volume percent hard refractory material in the densified composite. As can be seen there, the hardness of materials in accordance with the present invention which incorporate a hard refractory in a silicon nitride matrix is greater than that of the intrinsic hardness of the refractory material in each case illustrated. In the particular case of silicon nitride containing titanium carbide, the hardness values of the densified compacts are greater than either sintered silicon nitride itself or titanium carbide itself. Moreover in every example illustrated in Figure 1, the hardness of the various mixtures of refractory carbide and silicon nitride is greater than would be expected for each mixture estimated on the basis of a simple law of combination. Thus, the hardness of the densified composite is greater than the fractional weight of silicon nitride in the composite times the hardness of silicon nitride plus the fractional weight of metal carbide times the hardness of the refractory material.

The plot of hardness data in Figure 1 also illustrates a marked decrease in hardness with increasing refractory material content above about 60 volume percent. This is attributed to the decreasing ability of the silicon nitride matrix to cement the particles of hard refractory as the volume occupied by those particles exceeds 60% of the volume of the total densified compact.

Since many of the metallic carbides usually employed in the production of tool articles are known to be susceptible to oxidation, the resistance to oxidation of silicon nitride based abrasion resistant materials in accordance with the present invention was evaluated for several samples. For example, appreciable oxidation of titanium carbide has been reported to occur at temperatures as low as 427°C.

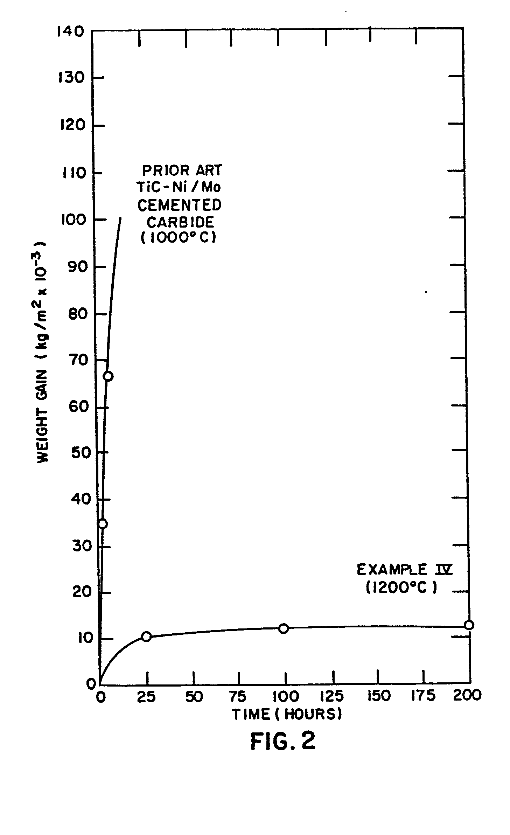

The materials of Example IV which contain titanium carbide, and those composition is given above in the Table was heated in air at 1200°C and the oxide weight gain was recorded as kg/m² of surface area. For comparison, a prior art TiC-Ni-Mo cemented carbide material was similarly heated, but at 1000°C. The data from these tests are plotted in Figure 2.

Examination of the data appearing in Figure 2 shows an appreciable reduction in the oxidation rate of materials of the present invention in which titanium carbide is included in a silicon nitride matrix over that of known materials in which titanium carbide is cemented in a metallic matrix. The low oxidation rate of Example IV is attributed to the use of yttrium oxide as the densification aid in Example IV which confers oxidation resistance upon silicon nitride based abrasive materials in which it is employed. Yttrium oxide is thus a preferred densification aid for silicon nitride based abrasion resistant materials in accordance with this invention when in applications requiring oxidation resistance.

The wear resistance of abrasion resistant materials in accordance with this invention was evaluated for several samples under high speed lathe cutting conditions.

A bar of gray cast iron was turned on a lathe using a prior art WC-Co cemented carbide tool and tools fabricated of material in accordance with this invention containing titanium carbide. The effective turning speed was 5.1 m/sec. The lathe was operated to effect a cut depth by the tool of 1.27 mm, with the tool moving across the face of the workpiece at a rate of 0.51 mm per revolution.

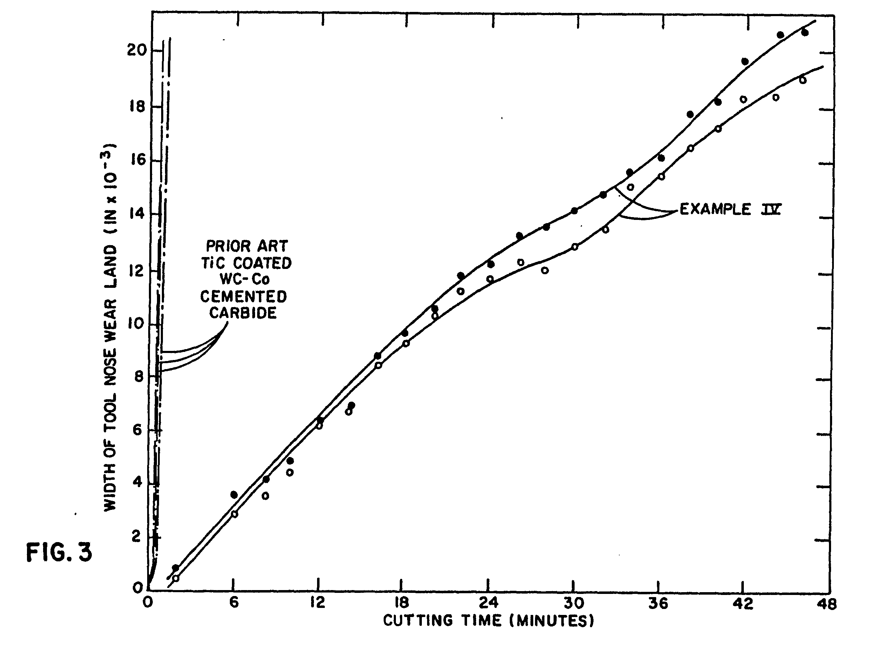

In Figure 3, the machinability of cutting tools in accordance with this invention, is compared with that of prior art TiC coated WC-Co cemented carbide tools.

As shown there, tools fabricated of material having the composition of Example IV demonstrated much longer useful life than the prior art cemented carbide tool under the stringent cutting conditions imposed, as detailed above.

There is thus provided by the present invention improved abrasion resistant materials having high hardness improved wear resistance, and increased resistance to oxidation. While there have been shown what are at present considered to be the preferred embodiments of the invention, it will be obvious to those skilled in the art that various changes and modifications may be made therein without departing from the scope of the invention as defined by the appended claims.

TABLE

| Ex. | Densification aid | Refractory material | Percentages of composition* | | | | | | Percent theoretical density | Hardness (rockwell a scale) |
|---|---|---|---|---|---|---|---|---|---|---|
| | | | Silicon nitride** | | Densification aid** | | Refractory material*** | | | |
| I | $Y_2O_3$ | TiC | 80.5 | (94.0) | 5.1 | (6.0) | 14.4 | (10.9) | 100 | 92.6 |
| II | $Y_2O_3$ | TiC | 57.0 | (94.0) | 3.6 | (6.0) | 39.4 | (32.6) | 100 | 93.4 |
| III | $Y_2O_3$ | TiC | 37.4 | (94.0) | 2.4 | (6.0) | 60.2 | (53.4) | 100 | 93.7 |
| IV | $Y_2O_3$ | TiC | 64.0 | (91.4) | 6.0 | (8.6) | 30.0 | (24.2) | 100 | 93.76 |
| V | $Y_2O_3$ | TaC | 32.1 | (94.1) | 2.0 | (5.9) | 65.9 | (49.1) | 100 | 91.5 |
| VI | $Y_2O_3$ | WC | 30.7 | (93.9) | 2.0 | (6.1) | 67.3 | (50.4) | 100 | 92.7 |

*Percentage figures not enclosed in parentheses are percentages by weight of each component based upon the weight of the total mixture.

**Percentage figures for silicon nitride and densification aid enclosed in parentheses are percentages by weight of each component based upon the weight of the silicon nitride-densification aid host matrix.

***Percentage figures for the refractory material enclosed in parentheses are percentages by volume based upon volume of the total densified compact.

## Claims

1. A densified composite cutting tool consisting essentially of hard particles of refractory metal carbides and nitrides or combinations thereof, uniformly distributed in a two-phase matrix containing silicon nitride and at least an additive, the first phase of said matrix consisting essentially of silicon nitride, characterised in that the second phase of said matrix comprises silicon nitride and a densification aid selected from yttrium oxide, zirconium oxide, hafnium oxide, and the lanthanide rare earth oxides and/or mixtures thereof.

2. A densified composite cutting tool in accordance with claim 1 wherein said hard refractory particles are selected from the group consisting of the carbides and nitrides of titanium, vanadium, chromium, zirconium, niobium, molybdenum, hafnium, tantalum, tungsten and combinations thereof.

3. A densified composite cutting tool according to claim 2 wherein said densification aid is selected from the group consisting of yttrium oxide and hafnium oxide.

4. A densified composite cutting tool in accordance with claim 3 wherein said hard refractory particles comprise from 1 to 60 volume percent of said article.

5. A densified composite cutting tool in accordance with claim 4 wherein said hard refractory particles are of average particle size below about 20 μm.

6. A densified composite cutting tool in accordance with claim 5 wherein said hard refractory particles comprise from 15 to 50 volume percent of said article.

7. A densified composite cutting tool in accordance with claim 6 wherein said hard refractory particles comprise a material having a microhardness in excess of 1000 kg/mm$^2$.

8. A densified composite cutting tool in accordance with claim 4 wherein said densification aid comprises from 1 to 25 percent of said matrix.

9. A densified composite cutting tool according to claim 4 having a density in excess of 90 percent theoretical.

10. A densified composite cutting tool according to claim 9 wherein said hard refractory particles comprise titanium carbide.

11. A densified composite cutting tool according to claim 9 wherein said second phase comprises less than about 5 percent by weight aluminum oxide.

12. A densified composite cutting tool according to claim 11 wherein said second phase comprises less than about 5 percent by weight further additional materials.

13. A densified composite cutting tool, according to claim 11 wherein said secondary phase consists essentially of less than about 3 percent by weight alumina, less than about 5 percent by weight further additional materials, said further additional materials including less than one percent by weight cation impurities.

14. A densified composite cutting tool according to claim 13 wherein said densification aid comprises yttrium oxide of hafnium oxide.

15. A powder composition for the production of an abrasion resistant material comprising a uniform mixture of 25% to 95% per weight of silicon nitride powder as the major ingredient, from 5% to 40% hard particles of refractory metal carbides and nitrides or combinations thereof, and at least one additive in an amount from 1% to 10%, characterised in that said additive is a densification aid, selected from yttrium oxide, zirconium oxide, hafnium oxide, and the lanthanide rare earth oxides and/or mixtures thereof, and in that less than 5% additional ingredients are comprised within said uniform mixture.

16. A process for preparing a composite article comprising densifying a powder composition consisting essentially of from about 25% to about 95% by weight of a silicon nitride powder, from about 1% to about 10% by weight of a powdered densification aid, from about 5 to about 40 percent by weight carbide or nitride of a refractory metal, and less than about 5% by weight additional ingredients at suitable pressure and temperature to form a densified composite consisting essentially of particles of a carbide or nitride of a refractory metal uniformly distributed in a matrix consisting essentially of a first phase and a second phase, said first phase consisting essentially of crystalline silicon nitride and said second refractory intergranular phase comprising silicon nitride and a densification aid selected from the group consisting of yttrium oxide, zirconium oxide, hafnium oxide, and lanthanide rare earth oxides and mixtures thereof.

17. A process for preparing a composite article according to claim 16 comprising densifying by hot pressing.

## Patentansprüche

1. Verdichtetes Verbundschiedwerkzeug, im wesentlichen bestehend aus harten Teilchen von feuerfesten Metallcarbiden und -nitriden oder Kombinationen daraus, die gleichmäßig in einer Zweiphasenmatrix verteilt sind, welche Siliciumnitrid und wenigstens ein Additiv enthält, wobei die erste Phase der Matrix im wesentlichen aus Siliciumnitrid besteht, dadurch gekennzeichnet, daß die zweite Phase der Matrix Siliciumnitrid und eine Verdichtungshilfe, gewählt aus Yttriumoxid, Zirkoniumoxid, Hafniumoxid und den Lanthaniden-Seltenerdoxiden und/oder Mischungen daraus, umfaßt.

2. Verdichtetes Verbundschneidwerkzeug nach Anspruch 1, worin die harten, feuerfesten Teilchen aus der Gruppe, bestehend aus den Carbiden und Nitriden von Titan, Vanadium, Chrom, Zirkonium, Niob, Molybdän, Hafnium, Tantal, Wolfram und Kombinationen daraus, gewählt werden.

3. Verdichtetes Verbundschneidwerkzeug nach Anspruch 2, worin die Verdichtungshilfe aus der Gruppe, bestehend aus Yttriumoxid und Hafniumoxid, gewählt wird.

4. Verdichtetes Verbundschneidwerkzeug nach Anspruch 3, worin die harten, feuerfesten Teilchen 1 bis 60 Vol.-% des Gegenstands umfassen.

5. Verdichtetes Verbundschneidwerkzeug nach Anspruch 4, worin die harten, feuerfesten Teilchen eine durchschittliche Teilchengröße unterhalb etwa 20 µm besitzen.

6. Verdichtetes Verbundschneidwerkzeug nach Anspruch 5, worin die harten feuerfesten Teilchen 15 bis 50 Vol.-% des Gegenstands umfassen.

7. Verdichtetes Verbundschneidwerkzeug nach Anspruch 6, worin die harten, feuerfesten Teilchen ein Material mit einer Mikrohärte oberhalb 1 000 kg/mm² umfassen.

8. Verdichtetes Verbundschneidwerkzeug nach Anspruch 4, worin die Verdichtungshilfe 1 bis 25 Gew.-% der Matrix umfaßt.

9. Verdichtetes Verbundschneidwerkzeug nach Anspruch 4 mit einer Dichte oberhalb 90% der theoretischen Dichte.

10. Verdichtetes Verbundschneidwerkzeug nach Anspruch 9, worin die harten, feuerfesten Teilchen Titancarbid umfassen.

11. Verdichtetes Verbundschneidwerkzeug nach Anspruch 9, worin die zweite Phase weniger als etwa 5 Gew.-% Aluminiumoxid umfaßt.

12. Verdichtetes Verbundschneidwerkzeug nach Anspruch 11, worin die zweite Phase weniger als etwa 5 Gew.-% weitere zusätzliche Materialien umfaßt.

13. Verdichtetes Verbundschneidwerkzeug nach Anspruch 11, worin die zweite Phase im wesentlichen aus weniger als etwa 3 Gew.-% Aluminiumoxid, weniger als etwa 5 Gew.-% weiterer zusätzlicher Materialien besteht, wobei die weiteren zusätzlichen Materialien weniger als 1 Gew.-% Kationenverunreinigungen einschließen.

14. Verdichtetes Verbundschneidwerkzeug nach Anspruch 13, worin die Verdichtungshilfe Yttriumoxid oder Hafniumoxid umfaßt.

15. Pulverzusammensetzung zur Herstellung eines abriebfesten Materials, welche eine gleichmäßige Mischung aus 25 bis 95 Gew.-% eines Siliciumnitridpulvers als Hauptbestandteil, 5 bis 40% harte Teilchen von feuerfesten Metallcarbiden und -nitriden oder Kombinationen daraus und wenigstens ein Additiv in einer Menge von 1 bis 10% umfaßt, dadurch gekennzeichnet, daß das Additiv eine Verdichtungshilfe, gewählt aus Yttriumoxid, Zirkoniumoxid, Hafniumoxid und den Lanthaniden-Seltenerdoxiden und/oder Mischungen daraus, ist und daß weniger als 5% zusätzliche Bestandteile in der gleichmäßigen Mischung enthalten sind.

16. Verfahren zur Herstellung eines Verbundgegenstands, welches das Verdichten einer Pulverzusammensetzung, welche im wesentlichen aus etwa 25 bis etwa 95 Gew.-% Siliciumnitridpulver, etwa 1 bis etwa 10 Gew.-% einer gepulverten Verdichtungshilfe, etwa 5 bis etwa 40 Gew.-% Carbid oder Nitrid eines feuerfesten Metalls und weniger als etwa 5 Gew.-% zusätzliche Bestandteile enthält, bei geeignetem Druck und Temperatur umfaßt, um einen verdichteten Verbund, welcher im wesentlichen aus Teilchen eines Carbids oder Nitrids eines feuerfesten Materials besteht, welche gleichmäßig in einer Matrix verteilt sind, die im wesentlichen aus einer ersten Phase und einer zweiten Phase besteht, zu bilden, wobei die erste Phase im wesentlichen aus kristallinem Siliciumnitrid besteht und die zweite feuerfeste, intergranulare Phase Siliciumnitrid und eine Verdichtungshilfe, gewählt aus der Gruppe, bestehend aus Yttriumoxid, Zirkoniumoxid, Hafniumoxid und den Lathaniden-Seltenerdioxiden und Mischungen daraus, umfaßt.

17. Verfahren zur Herstellung eines Verbundgegenstands nach Anspruch 16, welches das Verdichten durch Warmpressen umfaßt.

**Revendications**

1. Outil de coupe en composite densifié comprenant essentiellement des particules dures de carbures et de nitrures de métaux réfractaires ou des mélanges de ceux-ci, uniformément distribuées dans une matrice diphasique contenant du nitrure de silicium et au moins un additif, la première phase de la dite matrice comprenant essentiellement du nitrure de silicium, caractérisé en ce que la seconde phase de la dite matrice comprend du nitrure de silicium et un aide à la densification choisi parmi l'oxyde d'yttrium, l'oxyde de zirconium, l'oxyde d'hafnium, et les oxydes de lanthanides et/ou les mélanges de ceux-ci.

2. Outil de coupe en composite densifié selon la revendication 1 caractérisé en ce que les dites particules réfractaires dures sont choisies dans le groupe comprenant les carbures et les nitrures de titane, de vanadium, de chrome, de zirconium, de niobium, de molybdène, d'hafnium, de tantale, de tungstène ou des mélanges de ceux-ci.

3. Outil de coupe en composite densifié selon la revendication 2 caractérisé en ce que le dit aide à la densification est choisi dans le groupe comprenant l'oxyde d'yttrium et l'oxyde d'hafnium.

4. Outil de coupe en composite densifié selon la revendication 3 caractérisé en ce qu'il composé de 1 à 60% en volume des dites particules réfractaires dures.

5. Outil de coupe en composite densifié selon la revendication 4 caractérisé en ce que la taille moyenne des dites particules réfractaires dures est inférieure à 20 µm environ.

6. Outil de coupe en composite densifié selon la revendication 5 caractérisé en ce qu'il composé de 15 à 50% en volume des dites particules réfractaire dures.

7. Outil de coupe en composite densifié selon la revendication 6 caractérisé en ce que la microdureté des dites particules réfractaires dures est supérieure à 1000 kg/mm².

8. Outil de coupe de composite densifié selon la revendication 4 caractérisé en ce que la dite matrice comprend entre 1 et 25% en poids du dit aide à la densification.

9. Outil de coupe en composite densifié selon la revendication 4 caractérisé en ce que sa densité est supérieure à 90% de la densité théorique.

10. Outil de coupe en composite densifié selon la revendication 9 caractérisé en ce que les dites particules réfractaires dures comprennent du carbure de titane.

11. Outil de coupe en composite densifié selon la revendication 9 caractérisé en ce que la dite seconde phase comprend moins de 5% environ en poids d'alumine.

12. Outil de coupe en composite densifié selon la revendication 11 caractérisé en ce que la dite seconde phase comprend moins de 5% environ en poids d'autres matériaux additionnels.

13. Outil de coupe en composite densifié selon la revendication 11 caractérisé en ce que la dite seconde phase comprend essentiellement moins de 3% environ en poids d'alumine, et moins de 5% envirion en poids d'autres matériaux additionnels, ces derniers incluant moins de 1% en poids d'impuretés cationiques.

14. Outil de coupe en composite densifié selon la revendication 13 caractérisé en ce que la dit aide à la densification comprend de l'oxyde d'yttrium et d l'oxyde d'hafnium.

15. Composition en poudre pour l'obtention d'un matériau résistant à l'abrasion constituée d'un mélange uniforme de 25 à 95% en poids de nitrure de silicium comme composant principal, entre 5 et 40% de particules dures de carbures et de nitrures de métaux réfractaires ou de mélanges de ceux-ci, et au moins entre 1 et 10% d'un additif, caractérisée en ce que le dit additif est un aide à la densification choisi parmi l'oxyde d'yttrium, l'oxyde de zirconium, l'oxyde d'hafnium, les oxydes de lanthanides et/ou les mélanges de ceux-ci, et en ce que le dit mélange uniforme comprend moins de 5% de matériaux additionnels.

16. Procédé de préparation d'un article composite comprenant la densification d'une poudre comprenant essentiellement entre 25 et 95% environ en poids d'une poudre de nitrure de silicium, entre 1 et 10% environ en poids d'un aide à la densification en poudre, entre 5 et 40% environ en poids d'un carbure ou d'un nitrure d'un métal réfractaire, et moins de 5% environ en poids de matériaux additionnels, à température et pression appropriées pour former un composite densifié comprenant essentiellement des particules d'un carbure ou d'un nitrure d'un métal réfractaire uniformément réparti dans une matrice comprenant essentiellement une première phase et une seconde phase, la dite première phase comprenant essentiellement du nitrure de silicium cristallin et la dite seconde phase intergranulaire réfractaire comprenant un nitrure de silicium et un aide à la densification choisi dans le groupe comprenant l'oxyde d'yttrium, l'oxyde de zirconium, l'oxyde d'hafnium, les oxydes de lanthanides, et les mélanges de ceux-ci.

17. Procédé de préparation d'un article composite selon la revendication 16 caractérisé en ce que la densification est effectuée par pression à chaud.

FIG. I

FIG. 2

FIG. 3